# EUROPEAN PATENT APPLICATION

(11) **EP 2 251 644 A1**
(43) Date of publication of application: **17.11.2010**
(21) Application number: 10160731.5
(22) Date of filing: 22.04.2010
(51) Int. Cl.: G01C 21/36, H04M 1/00, G06F 3/048, G06F 3/01

(54) **Rotary input device and electronic equipment**

(30) Priority: 22.04.2009 JP 2009104047
(71) Applicant: Funai Electric Co., Ltd., Daito-shi, Osaka 574-0013 (JP); Pro-tech Design Corporation, Osachi Okaya-shi Nagano 394-0081 (JP)
(72) Inventor: Nagashima, Kenji, Daito-shi Osaka 574-0013 (JP); Tsubota, Hirono, Daito-shi Osaka 574-0013 (JP); Takahashi, Kazuhiro, Daito-shi Osaka 574-0013 (JP); Suzuki, Takahiko, Okaya-shi Nagano 394-0081 (JP); Sako, Nobuyuki, Okaya-shi Nagano 394-0081 (JP); Kodaira, Takeshi, Okaya-shi Nagano 394-0081 (JP)
(74) Representative: Grünecker, Kinkeldey, Stockmair & Schwanhäusser Anwaltssozietät

(57) **Abstract**

Disclosed is a rotary input device including: a rotary operation device; a detection section; a display control section; a rotation driving section to apply a rotary force to the rotary operation device; a first force sense presenting section to present a first force sense by a combination of at least any two of applying a rotary force in a normal rotation direction, applying a rotary force in a reverse rotation direction, and stopping applying when the detected rotation angle reaches a predetermined switching angle corresponding to the displayed predetermined display information; a second force sense presenting section to present a second force sense different from the first force sense by applying the rotary force in the normal rotation direction when the rotation angle detected by the detection section is within a first range, and in the reverse rotation direction when the angle is within a second range.

## Description

### BACKGROUND OF THE INVENTION

### Field of the Invention

The present invention relates to a rotary input device and electronic equipment equipped with the rotary input device.

### Description of Related Art

A rotary input device has hitherto been known as an operation input device for operating electronic equipment, which rotary input device is equipped with a rotary operation device, such as a dial, to enable an operator to select a desired selection item among a plurality of selection items displayed in a display section in accordance with a rotation operation of the rotary operation device by an operator.

To put it concretely, this sort of rotary input device is configured to switch a selection item under selection in a predetermined order every reaching of the rotation angle of a rotary operation device to a switching angle by a rotation operation, and to allow an operator to determine selection by depressing the rotary operation device or a similar operation when a desired selection item is switched to an under-selection state. Consequently, it is required to rotate the rotary operation device to a switching angle corresponding to a desired selection item so that the desired selection item becomes the under-selection state thereof. Because it is required to finely adjust the rotation angle of the rotary operation device so that the rotation angle agrees with the switching angle corresponding to the desired selection item if the rotary force of the rotary operation device is constant in the above case, this sort of rotary input device is not easy to handle.

Accordingly, for example, there has been proposed a rotary input device (see, for example, Japanese Patent Application Laid-Open Publications Nos. 2003-228455 and 2003-345499) which drives the rotary operation device thereof so that the rotation of the rotary operation device is light when the rotation angle of the rotary operation device is within an interval (interval existing on the reverse rotation direction side of the switching angle) in which the rotation angle is approaching the switching angle, and so that the rotation of the rotary operation device is heavy when the rotation angle thereof is within an interval over the switching angle (interval existing on the normal rotation direction side of the switching angle). Because the rotary input device can give an operator an assisting feeling and a breaking feeling, the operator can easily perform the rotation operation of according the rotation angle of the rotary operation device with the switching angle corresponding to a desired selection item.

However, the rotary input device of Japanese Patent Application Laid-Open Publications Nos. 2003-228455 and 2003-345499 can give an operator the assisting feeling and the breaking feeling, but cannot give an operating feeling (clicking feeling) that could obtain when a button is mechanically depressed. Consequently, the rotary input device is not entirely satisfactory for an operator requiring a distinct operating feeling.

### SUMMARY OF THE INVENTION

It is an object of the present invention to provide a rotary input device capable of giving more distinct operating feeling at the timing when the rotation angle of the rotary operation device thereof reaches a switching angle and electronic equipment equipped with the rotary input device.

According to a first aspect of the invention, there is provided a rotary input device, including: a rotary operation device rotatable around a shaft by receiving a rotation operation of an operator; a detection section to detect a rotation angle of the rotary operation device; a display control section to make a display section display predetermined display information and switch a display state of the predetermined display information in conjunction with rotation of the rotary operation device; a rotation driving section to apply a rotary force to the rotary operation device; a first force sense presenting section to present a first force sense to the operator through the rotary operation device by a combination of at least any two of applying a rotary force in a normal rotation direction to the rotary operation device by the rotation driving section, applying a rotary force in a reverse rotation direction to the rotary operation device, and stopping applying the rotary force to the rotary operation device when the rotation angle detected by the detection section reaches a predetermined switching angle corresponding to the predetermined display information displayed on the display section; a second force sense presenting section to present a second force sense different from the first force sense to the operator through the rotary operation device by applying the rotary force in the normal rotation direction to the rotary operation device by the rotation driving section when the rotation angle detected by the detection section is within a first range situated on a reverse rotation direction side of the predetermined switching angle, and by applying rotary force in the reverse rotation direction to the rotary operation device the by the rotation driving section when the rotation angle detected by the detection section is within a second range situated on a normal rotation direction side of the predetermined switching angel.

According to a second aspect of the invention, there is provided electronic equipment, including: a rotary input device; and a display section, wherein the rotary input device including: a rotary operation device rotatable around a shaft by receiving a rotation operation of an operator; a detection section to detect a rotation angle of the rotary operation device; a first display control section to make the display section display predetermined display information and switch a display state of the predetermined display information in conjunction with rotation of the rotary operation device; a rotation driving section to apply a rotary force to the rotary operation device; a first force sense presenting section to present a first force sense to the operator through the rotary operation device by a combination of at least any two of applying a rotary force in a normal rotation direction to the rotary operation device by the rotation driving section, applying a rotary force in a reverse rotation direction to the rotary operation device, and stopping applying the rotary force to the rotary operation device when the rotation angle detected by the detection section reaches a predetermined switching angle corresponding to the predetermined display information displayed on the display section; a second force sense presenting section to present a second force sense different from the first force sense to the operator through the rotary operation device by applying the rotary force in the normal rotation direction to the rotary operation device by the rotation driving section when the rotation angle detected by the detection section is within a first range situated on a reverse rotation direction side of the predetermined switching angle, and by applying the rotary force in the reverse rotation direction to the rotary operation device by the rotation driving section when the rotation angle detected by the detection section is within a second range situated on a normal rotation direction side of the predetermined switching angel; a second display control section to make the display section display a predetermined route from a start point to an end point and a point showing a current position; and a third force sense presenting section to present a third force sense to the operator through the rotary operation device by applying a rotary force in a clockwise direction to the rotary operation device by the rotation driving section if the route displayed on the display section is in a rightward direction when the point displayed on the display section is situated on a branch point, by applying a rotary force in a counterclockwise direction to the rotary operation device by the rotation driving section if the route displayed on the display section is in a leftward direction when the point displayed on the display section is situated on the branch point, and by applying to the rotary operation device a rotary force in a direction of repelling any rotation in the clockwise direction and the counterclockwise direction by the rotation driving section if the route displayed on the display section is in a direct advance direction when the point displayed on the display section is situated on the branch point, wherein the second force sense presenting section enlarges the rotary force in the normal rotation direction to be applied to the rotary operation device by the rotation driving section as the rotation angle detected by the detection section approaches the predetermined switching angle when the rotation angle detected by the detection section is within the first range situated on the reverse rotation direction side of the predetermined switching angle, and the second force sense presenting section lessens the rotary force in the reverse rotation direction to be applied to the rotary operation device by the rotation driving section as the rotation angle detected by the detection section becomes more distant from the predetermined switching angle when the rotation angle detected by the detection section is within the second range situated on the normal rotation direction side of the predetermined switching angle; and the first force sense presenting section and/or the second force sense presenting section changes ways of presenting the first force sense and/or the second force sense by a first predetermined switching angle and a second predetermined switching angle among the plurality of predetermined switching angles.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a perspective view of a cellular phone handset with which a rotary input device of an embodiment, to which the present invention is applied, is equipped;
FIG. 2 is a block diagram showing the functional configuration of the cellular phone handset of the present embodiment;
FIG. 3 is a perspective view of the external appearance of the rotary input device of the present embodiment;
FIG. 4 is a sectional view taken along a line IV-IV in FIG. 3;
FIG. 5 is an exploded view of the rotary input device of the present embodiment;
FIG. 6 is a view showing an example of a screen displayed in the display section with which the cellular phone handset of the present embodiment is equipped;
FIG. 7 is a view for describing examples of first and second ranges when the rotary input device is operated to rotate in the clockwise direction;
FIG. 8 is a view for describing examples of the first and second ranges when the rotary input device is operated to rotate in the counterclockwise direction;
FIG. 9 is a diagram for describing an example of the way of presenting a second force sense when the rotary input device is operated to rotate in the clockwise direction;
FIG. 10 is a diagram for describing an example of the way of presenting the second force sense when the rotary input device is operated to rotate in the counterclockwise direction;
FIG. 11 is a view showing examples of a predetermined route from a start point to an end point and a point showing the current position, both of which route and point are displayed on a display section with which the cellular phone handset of the present embodiment is equipped;
FIG. 12 is a flow chart for describing the processing pertaining to the presentation of a first force sense and the second force sense by the cellular phone handset of the present embodiment;
FIG. 13 is a flow chart for describing the processing pertaining to the presentation of a third force sense by the cellular phone handset of the present embodiment; and
FIG. 14 is a view showing an example of a screen displayed in the display section with which the cellular phone handset of the present embodiment is equipped.

### DETAILED DESCRIPTION OF THE PREFERRED EMBODIMENTS

In the following, an embodiment of the present invention will be described in detail by reference to the accompanying drawings. Incidentally, the scope of the present invention is not limited to the shown examples.

In the present embodiment, it is intended to describe the present embodiment by illustrating a cellular phone handset performing verbal communication by wireless communication as electronic equipment equipped with a rotary input device according to the present invention.

Incidentally, in the following description, it is supposed that the side on which a rotary input device 10 and a display panel 331 of a display section 33 are arranged is treated as the front side, and the side opposed to the side on which the rotary input device 10 and the display panel 331 are arrange is treated as the back side in a cellular phone handset 1 of the present embodiment. Then, the side on which the display panel 331 is arranged is treated as the top side; the side on which the rotary input device 10 is arranged is treated as the bottom side; and the direction perpendicular to both of the front-back direction and the top-bottom direction is treated as the left-right direction.

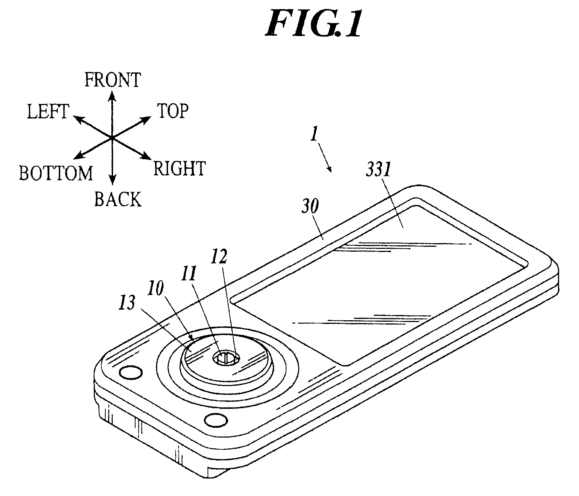

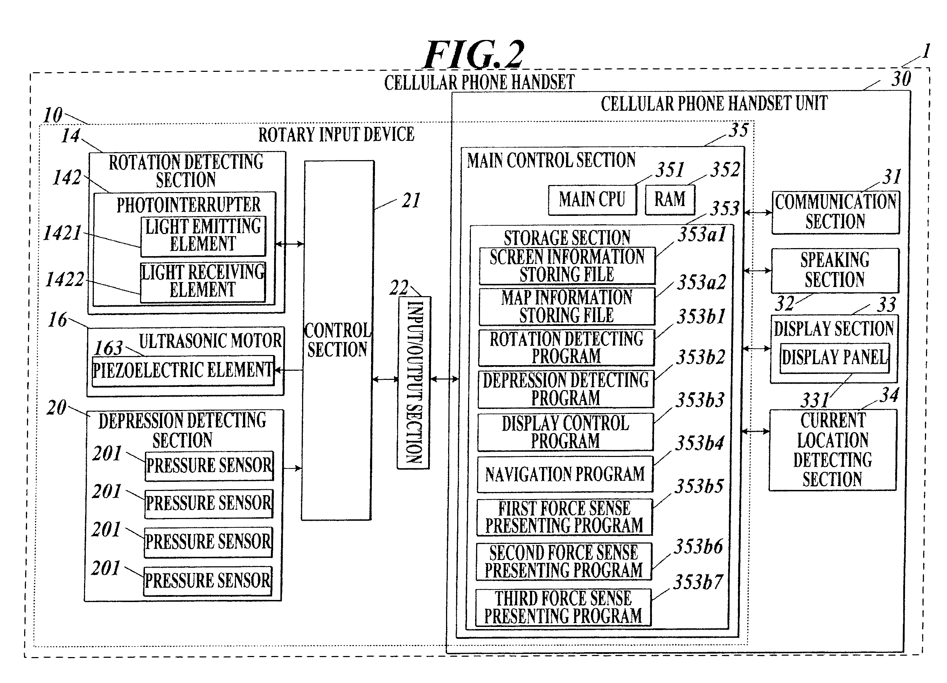

The cellular phone handset 1 is composed to include, for example, as shown in FIGS. 1 and 2, the rotary input device 10 for an input operation by an operator, and a cellular phone handset unit 30 operated by the rotary input device 10.

### (Rotary Input Device)

First, the rotary input device 10 of the present embodiment is described.

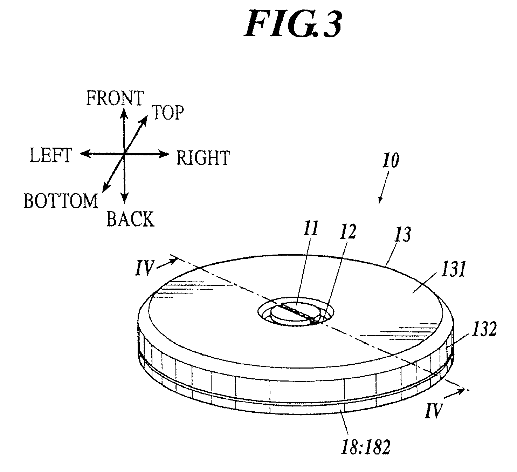

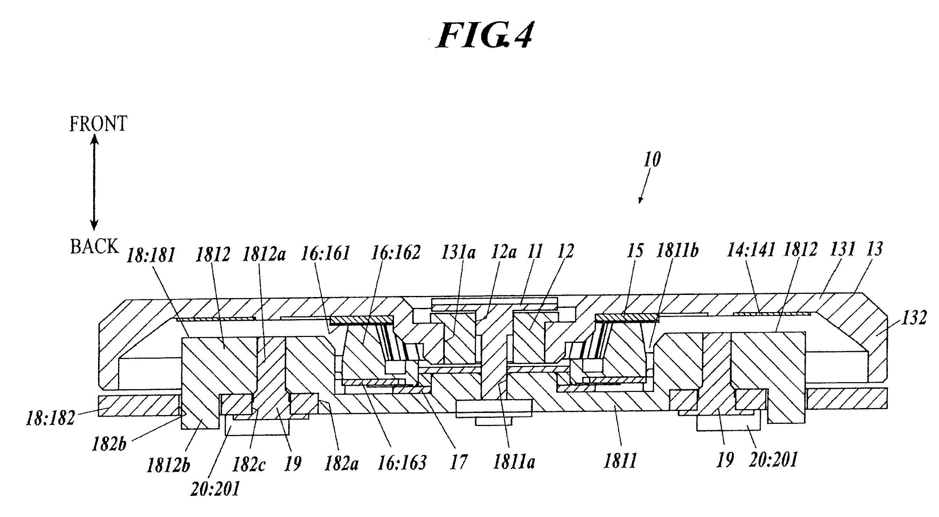

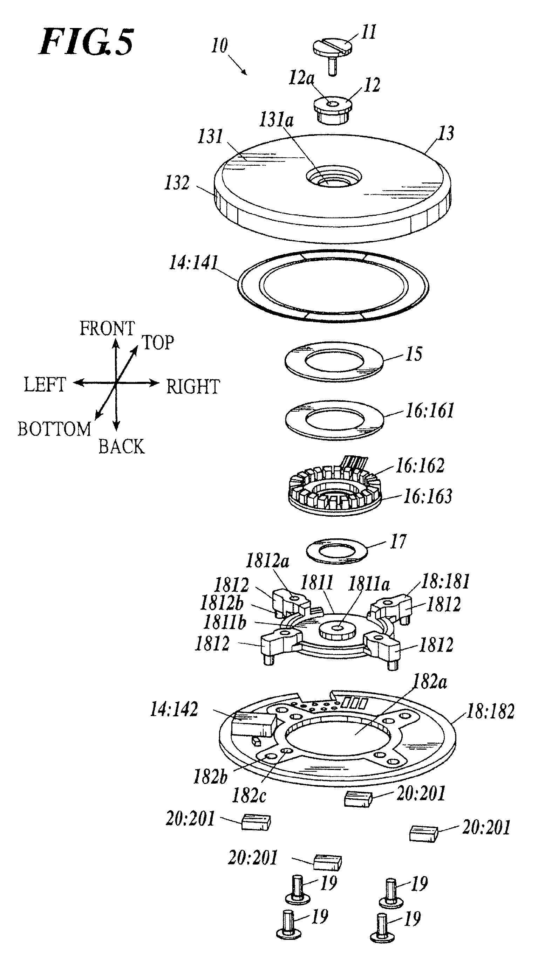

The rotary input device 10 is equipped with, for example, as shown in FIGS. 2-5, a rotary operation device 13, which an operator can manually rotate, and a supporting stand 18, which is provided on the back side of the rotary operation device 13 to support the rotary operation device 13 rotatably. The whole shape of the rotary input device 10 is formed into an almost a disk shape.

The rotary operation device 13 is equipped with a circular front surface section 131 including an aperture section 131a at the center thereof, and a circumferential surface section 132 projecting from the edge portion of the front surface section 131 to the back over the whole circumference. The rotary operation device 13 is provided at a position to cover the front side of the supporting stand 18, and consequently the front surface section 131 and the circumferential surface section 132 are form the front surface and the circumferential surface of the rotary input device 10, respectively.

The front surface section 131 forms the operation surface for a rotation operation by an operator, and the operator performs an input operation into the cellular phone handset unit 30 by rotating the rotary operation device 13 while pressing down a point of the front surface section 131 with a fingertip or while pinching the circumferential surface section 132.

The rotary operation device 13 may be formed of, for example, a material having a radiation performance, such as aluminum, or a material having a strong resistance property to an impact from the outside, alternatively may be formed of a resin or the like.

The supporting stand 18 is equipped with a base 181 and a polychlorinated biphenyl (PCB) substrate 182 connected to the base 181. By providing the supporting stand 18 at a position to cover the an aperture on the back side of the rotary operation device 13, the supporting stand 18 forms the back surface of the rotary input device 10.

The base 181 is equipped with an almost doughnut disk-like pedestal section 1811 having an aperture at the center thereof and four extension sections 1812 extending toward the outside from the peripheral portion of the pedestal section 1811.

Each of the extension sections 1812 is provided with a threaded hole 1812a for attaching a screw and a projection 1812b formed on the back surface further outward than the threaded hole 1812a to extend toward the rear.

The base 181 is made of a material, such as polycarbonate.

The PCB substrate 182 is formed in a tabular ring having almost the same outer diameter as that of the rotary operation device 13, and the pedestal section 1811 of the base 181 is fit into an aperture section 182a at almost the center of the PCB substrate 182. Moreover, the PCB substrate 182 is provided with four attaching holes 182b for attaching the projections 1812b provided on the back surface of each of the extension sections 1812 of the base 181 to project backward are formed in the PCB substrate 182 correspondingly to the projections 1812b, respectively. Then, the PCB substrate 182 and the base 181 are integrally connected to each other by attaching the pedestal section 1811 of the base 181 to the aperture section 182a of the PCB substrate 182, and by fitting the projections 1812b of the base 181 into the attaching holes 182b of the PCB substrate 182, respectively.

Moreover, four hole sections 182c, each having a diameter slightly larger than that of each of the threaded holes 1812a of the base 181, are formed in the PCB substrate 182 at positions overlapping the threaded holes 1812a, respectively, correspondingly to the threaded holes 1812a, respectively. A screw 19 is screwed from the back side of the PCB substrate 182 into each of the threaded holes 1812a of the base 181 through each of the hole sections 182c of the PCB substrate 182, and thereby the PCB substrate 182 and the base 181 are fixed to each other.

Furthermore, a bearing 12 is provided to be arranged on the inner circumferential surface of the aperture section 131a of the front surface section 131 with which the rotary operation device 13 is equipped, a screw 11 to function as a rotation shaft of the rotary operation device 13 is inserted into a through-hole 12a at the center of the bearing 12. Then, the screw 11 and the supporting stand 18 are fix to each other by inserting the screw 11 into the through-hole 12a of the bearing 12 from the front side of the rotary operation device 13 and further by screwing the back end part of the screw 11 projecting backward into the female screw formed on the inner circumferential surface of the aperture 1811a at the center of the pedestal section 1811 with which the base 181 is equipped. Hereby, the rotary operation device 13 is connected to the supporting stand 18 rotatably around the screw 11.

Moreover, a space is formed between the rotary operation device 13 and the supporting stand 18, and the space contains a rotation detecting section 14 detecting a rotation angle of the rotary operation device 13, an ultrasonic motor 16 as a rotation driving section to rotate the rotary operation device 13, a depression detecting section 20 detecting the depression of the rotary operation device 13 in the axial direction (front-back direction), a control section 21 performing the integrated control of the rotary input device 10, an input/output section 22 performing the transmission and the reception of various signals with the cellular phone handset unit 30, and the like, in an arranged state.

The rotation detecting section 14 is composed of, for example, a ring-like code wheel 141, and a photointerrupter 142 detecting the rotation angle displacement of the code wheel 141.

The code wheel 141 is fixated onto the inner surface (back surface) of the front surface section 131, with which the rotary operation device 13 is equipped, in the state in which the center of the code wheel 141 agrees with the center of the rotary operation device 13, and the code wheel 141 rotates in conjunction with the rotary operation device 13. A light reflecting surface is printed on the back surface of the code wheel 141 at a predetermined pitch of two detection patterns of an A phase and a B phase along a circumferential direction.

The photointerrupter 142 is a reflection type photointerrupter composed of a light emitting element 1421, such as a light emitting diode (LED), and a light receiving element 1422, such as a photo integrated circuit (IC). The photointerrupter 142 is mounted at a position opposed to the code wheel 141 on the front surface of the PCB substrate 182, and is connected to the control section 21.

The light receiving element 1422 includes at least two light receiving surfaces and is configured to output the detection signals of the A phase and the B phase, which differs from each other by 90 degrees.

The photointerrupter 142 receives the reflection light of a light emitted from the light emitting element 1421 toward the code wheel 141 with the light receiving element 1422, and counts the reflection light. Thereby, the photointerrupter 142 detects the rotation quantity and the rotation direction of the rotary operation device 13, and outputs the detection results to the control section 21. The control section 21 outputs the detection results from the photointerrupter 142 to the cellular phone handset unit 30 through the input/output section 22, and then the cellular phone handset unit 30 specifies the rotation angle of the rotary operation device 13 on the basis of the detection results.

The ultrasonic motor 16 is composed of, for example, a piezoelectric element 163, a ring-like stator (vibrating body) 162 and a rotor 161 touching the front surface of the stator 162. The ultrasonic motor 16 drives the rotary operation device 13 in accordance with a control signal from the control section 21 to rotate the rotary operation device 13 around the shaft thereof.

The stator 162 is fit into a ring-like concave portion 1811b formed on the front surface of the pedestal section 1811 with which the base 181 is equipped, and is fixed to the base 181 with a tabular ring-like double-coated adhesive tape 17.

The stator 162 is equipped with a plurality of convex parts provided to be arranged along the circumferential direction of the stator 162 at the front part thereof, and the stator 162 is equipped with the plurality of piezoelectric elements 163, which generates vibrational energy in response to an application of a drive voltage based on a drive signal and is arranged along the circumferential direction of the stator 162 on the back surface thereof.

The rotor 161 is made of a material, such as high-molecular polyethylene, and has a tabular ring-like shape.

The rotor 161 is provided to be arranged at a position sandwiched between the stator 162 and the rotary operation device 13 on the inner circumference side of the code wheel 141, and is fixed to the rotary operation device 13 with a tabular ring-like double-coated adhesive tape 15 in the state of being arranged so that the center of the rotor 161 agrees with are the center of the rotary operation device 13. The rotor 161 rotates in conjunction with the rotary operation device 13. That is, the front surface of the rotor 161 is adhered to the back surface of the double-coated adhesive tape 15 adhered on the back surface of the front surface section 131, with which the rotary operation device 13 is equipped, and the back surface of the rotor 161 is touched to the convex parts of the stator 162. The back surface of the rotor 161 is made to have a high friction coefficient, and is configured to rotate in the counter direction to the direction of a progressive wave produced by a vibration of the stator 162 touched to the back surface.

The piezoelectric element 163 is connected to the control section 21. When a predetermined drive voltage is applied from the control section 21 to the piezoelectric element 163, the whole body of the stator 162 is vibrated by a ultrasonic vibration of the piezoelectric element 163, and the progressive wave is transmitted to the rotor 161. By this, the rotor 161 rotates. Then, the rotary input device 10 is configured to rotate the rotary operation device 13 by the transmission of the rotary force of the rotor 161 to the rotary operation device 13. Furthermore, the rotary input device 10 is configured to be able to freely set the magnitude and the rotation direction of the rotary force of the rotary operation device 13 caused by the ultrasonic vibration of the piezoelectric element 163 by controlling the drive frequency of the drive voltage applied to the piezoelectric element 163.

The depression detecting section 20 is equipped with four pressure sensors 201 fixated at four positions on the top side, bottom side, left side, and right side of the back surface of the PCB substrate 182, respectively, and the depression detecting section 20 is connected to the control section 21.

The depression detecting section 20 detects a depression of the rotary operation device 13 in the axial direction (front-back direction) thereof with each of the pressure sensors 201 to output the detection results to the control section 21. The control section 21 outputs the detection results from the depression detecting section 20 to the cellular phone handset unit 30 through the input/output section 22, and the cellular phone handset unit 30 specifies the depressed position of the rotary operation device 13 and the depression force at the time of the depression of the rotary operation device 13 on the basis of the detection results.

As the pressure sensors 201, for example, a resistive film type pressure sensor, a diffusion type one, a film formation type one, an electrical capacitance type one, and a mechanical type one can be used.

The control section 21 is configured to include, for example, a central processing unit (CPU), a random access memory (RAM), and a storage section.

The control section 21 is connected to the cellular phone handset unit 30 through the input/output section 22. The control section 21 performs the centralized control, of the operation of each section constituting the rotary input device 10 in accordance with a control signal input from the cellular phone handset unit 30, and outputs a signal input from each section constituting the rotary input device 10 to the cellular phone handset unit 30.

To put it concretely, the control section 21 is connected to the photointerrupter 142 of the rotation detecting section 14. The control section 21 instructs the light emitting element 1421 of the photointerrupter 142 to emit a light in accordance with a control signal input from the cellar phone handset 30 through the input/output section 22, and outputs a detection signal, input from the light receiving element 1422 of the photointerrupter 142, as a detection result to the cellular phone handset unit 30 through the input/output section 22. Hereby, the cellular phone handset unit 30 specifies a rotation angle of the rotary operation device 13.

Moreover, the control section 21 is connected to the ultrasonic motor 16, and outputs a predetermined drive signal to the piezoelectric element 163 of the ultrasonic motor 16 in accordance with a control signal input from the cellular phone handset unit 30 through the input/output section 22. Hereby, the rotary operation device 13 rotates around the shaft thereof.

Moreover, the control section 21 is connected to the depression detecting section 20, and outputs a detection signal as the detection results input from the respective pressure sensors 201 of the depression detecting section 20 to the cellular phone handset unit 30 through the input/output section 22. Hereby, the cellular phone handset unit 30 can specify the depressed position of the rotary operation device 13 and the depression force at the time of the depression of the rotary operation device 13.

The input/output section 22 is connected to the main control section 34 of the cellular phone handset unit 30. The input/output section 22 sometimes outputs a control signal input from the main control section 34 to the control section 21, and sometimes outputs a signal input from the control section 21 to the main control section 34.

### (Cellular Phone Handset Unit)

Next, the cellular phone handset unit 30 of the present embodiment will be described.

The cellular phone handset unit 30 is configured to include, for example, as shown in FIG. 2, a communication section 31 equipped with an antenna to transmit and receive a wireless signal with external equipment, a speaking section 32 equipped with a speaker and a microphone for inputting and outputting a sound, the display section 33 equipped with the display panel 331 to display various screens thereon, a current position detecting section 34 equipped with a global positioning system (GPS) to detect the current position, and the main control section 35 to collectively control the cellular phone handset 1.

Incidentally, publicly known techniques are used for the communication section 31 and the speaking section 32 for realizing verbal communication functions with external equipment by means of wireless signals, the detailed descriptions of the communication section 31 and the speaking section 32 are omitted.

The display section 33 is configured to include, for example, the display panel 331, such as a liquid crystal display (LCD) panel, and performs given display processing in conformity with a control signal input from the main control section 35.

The current position detecting section 34 is configured to include, for example, a GPS sensor or the like to detect a GPS signal transmitted from a GPS satellite as a sensor for detecting the current position of the cellular phone handset 1.

The main control section 35 is configured to specify the current position of the cellular phone handset 1 by receiving the output of the data, detected by the GPS sensor or the like, from the current position detecting section 34.

Incidentally, the current position detecting section 34 may be equipped with a gyro sensor detecting the travelling direction of the cellular phone handset 1 as a sensor for detecting the current position of the cellular phone handset 1, a speed sensor detecting a speed of the cellular phone handset 1, and the like in addition to the GPS sensor.

The main control section 35 is configured to include, for example, as shown in FIG. 2, a main central processing unit (CPU) 351, a random access memory (RAM) 352, a storage section 353, and the like.

The main CPU 351 performs various control operations in conformity with, for example, the various processing programs stored in the storage section 353, which are intended for the use of the cellular phone handset 1.

The RAM 352 includes, for example, a program storing region for expanding the processing program and the like to be executed by the main CPU 351, and a data storing region for storing input data, the processing results produced at the time of the execution of the processing program, and the like.

The storage section 353 stores, for example, a system program executable in the cellular phone handset 1, various processing programs executable on the system program, the data to be used at the time of the execution of these various processing programs, and the data of the processing results of the operation processing of the main CPU 351. Incidentally, programs are stored in the storage section 353 in the forms of computer-readable program codes.

To put it concretely, the storage section 353 stores, for example, as shown in FIG. 2, a screen information storing file 353a1, a map information storing file 353a2, a rotation detecting program 353b1, a depression detecting program 353b2, a display control program 353b3, a navigation program 353b4, a first force sense presenting program 353b5, a second force sense presenting program 353b6, and a third force sense presenting program 353b7.

The screen information storing file 353a1 stores the screen information pertaining to the screens to be displayed on the display panel 331 of the display section 33.

The map information storing file 353a2 stores, for example, the map information pertaining to the map expressing a predetermined region (for example, a map of Japan).

The rotation detecting program 353b1 enables the main CPU 351 to realize the function of calculating a rotation angle of the rotary operation device 13 on the basis of a detection result of the rotation detecting section 14, which detection result has been input from the control section 21 through the input/output section 22.

To put it concretely, for example, if the rotary operation device 13 has rotated by 90 degrees in the clockwise direction from a time point when a screen displayed on the display panel 331 switched, the rotation angle of the rotary operation device 13 at the time point is set as "0 degree," then the main CPU 351 calculates the rotation angle of the rotary operation device 13 as "+90 degrees." If the rotary operation device 13 has rotated by 90 degrees in the counterclockwise direction from the time point, then the main CPU 351 calculates the rotation angle of the rotary operation device 13 as "-90 degrees." Moreover, if the rotary operation device 13 has rotated by 90 degrees in the clockwise direction from the time point and rotated in the counterclockwise direction by 20 degrees, then the main CPU 351 calculates the rotation angle of the rotary operation device 13 as "+70 degrees."

Incidentally, a detection section is composed of the rotation detecting section 14 and the main CPU 351 executing the rotation detecting program 353b1.

The depression detecting program 353b2 enables the main CPU 351 to realize the function of calculating a depressed position of the rotary operation device 13 and a depression force at the time when the rotary operation device 13 is depressed on the basis of the detection results of the depression detecting section 20, which detection results have been input from the control section 21 through the input/output section 22.

To put it concretely, the main CPU 351 calculates the depressed position and the depression force by performing vector operations on the basis of the respective detection results from the pressure sensors 201 fixated on the top side, the bottom side, the left side, and the right side on the back surface of the PCB substrate 182.

For example, if the main CPU 351 calculates (detects) the depression of the central part of the rotary operation device 13 when a main menu screen or the like is displayed on the display panel 331 of the display section 33, then the main CPU 351 determines the selection of the selection item under selection (described below).

Moreover, for example, if the main CPU 351 detects the depression of the upper side part, the lower side part, the left side part, or the right side part of the rotary operation device 13 when the image such as a map or the like is displayed on the display panel 331, then the main CPU 351 scrolls the image in the direction according to the depressed position of the rotary operation device 13. That is, if the main CPU 351 detects the depression of the upper side part of the rotary operation device 13, the main CPU 351 scrolls the image upward. If the main CPU 351 detects the depression of the lower side part of the rotary operation device 13, the main CPU 351 scrolls the image downward. If the main CPU 351 detects the depression of the left side part of the rotary operation device 13, the main CPU 351 scrolls the image leftward. If the main CPU 351 detects the depression of the right side part of the rotary operation device 13, the main CPU 351 scrolls the image rightward.

The display control program 353b3 enables the main CPU 351 to realize the function of making the display panel 331 of the display section 33 display predetermined display information and switching the display state of the predetermined display information in conjunction with the rotation of the rotary operation device 13.

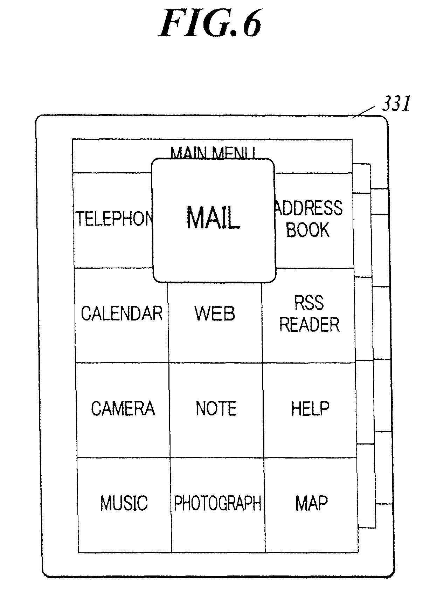

To put it concretely, the main CPU 351 makes the display panel 331 display a "main menu screen," in which, for example, icons showing respective selection items of "telephone," "mail," and "address book," and the like are arranged in a matrix of 4 x 3 as shown in FIG. 6, on the basis of the screen information stored in the screen information storing file 353a1.

Moreover, the main CPU 351 makes the display panel 331 display the plurality of selection items arranged in the screen under display in a way by which the selection item under selection and the other selection items (unselected selection items) are identifiable. To put it concretely, the main CPU 351, for example, enlarges the magnitude of the icon showing the selection item under selection to be larger than those of the icons showing the other selection items to make the display panel 331 perform a display capable of identifying the selection item under selection and the other selection items. For example, as shown in FIG. 6, the selection item "mail" is under selection in the "main menu screen" under display on the display panel 331.

Then, the main CPU 351 switches the selection item under selection in conjunction with the rotation of the rotary operation device 13. That is, the main CPU 351 switches the selection item under selection according to the rotation of the rotary operation device 13 on the basis of the rotation angle calculated (detected) by the main CPU 351 that has executed the rotation detecting program 353b1.

To put it more concretely, if the detected rotation angle of the rotary operation device 13 has increased, then the main CPU 351 judges that the rotary operation device 13 has rotated in the forward direction (clockwise direction), and switches the selection item under selection in a predetermined selection order. If the detected rotation angle of the rotary operation device 13 had decreased, then the main CPU 351 judges that the rotary operation device 13 has rotated backward (counterclockwise direction), and switches the selection item under selection in the order reverse to that of the selection order.

Incidentally, the selection order is, for example, the order of (1, 1) → (1, 2) → (1, 3) → (2, 1) → (2, 2) → (2, 3) → (3, 1) → (3, 2) → (3, 3) → (4, 1) → (4, 2) → (4, 3) → (1, 1) → (1, 2) → ... , where the positions at which the selection items are arranged are expressed by (row, column).

Here, the main CPU 351 is configured to switch the selection item under selection, for example, when the rotation angle of the rotary operation device 13 has reached predetermined switching angles (for example, multiples of 60 degrees).

The main CPU 351 functions as a display control section (first display control section) by executing this display control program 353b3.

The navigation program 353b4 enables the main CPU 351 to realize the function of performing the positioning of the absolute two-dimensional current position (latitude, longitude) or the three-dimensional current position (latitude, longitude, altitude) on the basis of the detected data input from the current position detecting section 34 to make the display panel 331 of the display section 33 display the positioned current position and a map based on the map information stored in the map information storing file 353a2 to be superimposed on each other.

Moreover, the navigation program 353b4 enables the main CPU 351 to realize the function of making the display panel 331 display a locomotion guiding display (route R or the like) for performing the navigation from a departure point (start point R1) to a destination point (end point R2) to be superimposed on the map displayed on the display panel 331 when the destination point (end point R2) is specified by a rotation operation of the rotary operation device 13 or the like by an operator.

The main CPU 351 functions as a second display control section by executing this navigation program 353b4.

The first force sense presenting program 353b5 enables the main CPU 351 to realize the function of presenting a force sense to an operator through the rotary operation device 13 by inputting a control signal into the control section 21 through the input/output section 22 to make the control section 21 output a drive signal to the piezoelectric element 163 of the ultrasonic motor 16.

Here, the "force sense" does not mean the sense of touch by a mere vibration, but means a sense of a weight applied onto a finger when an operator rotates the rotary operation device in the present invention. To put it concretely, the "force sense" means the one causing the operator to feel rotation to be light or to be heavy.

To put it concretely, when the rotation angle of the rotary operation device 13 detected by the main CPU 351 that has executed the rotation detecting program 353b1 reaches a predetermined switching angle corresponding to predetermined display information displayed on the display panel 331 of the display section 33, the main CPU 351 presents a first force sense to the operator by the combination of applying a rotary force in the normal rotation direction to the rotary operation device 13, applying a rotary force in the reverse rotation direction, and stopping applying the rotary force, and gives the operator an operating feeling to make the operator perceive the switching of the display state of the display information. That is, the main CPU 351 presents the first force sense at the time of, for example, the switching of the selection item under selection to make the operator perceive the switching of the selection item under selection.

To put it more concretely, for example, when the detected rotation angle of the rotary operation device 13 reaches a switching angle, the main CPU 351 gives a rotary force in the reverse rotation direction to the rotary operation device 13 to rotate the rotary operation device 13 by a predetermined angle in the reverse rotation direction in a predetermined time before stopping the applying of the rotary force. After that, the main CPU 351 gives a rotary force in the normal rotation direction to the rotary operation device 13 to rotate the rotary operation device 13 by a predetermined angle in the normal rotation direction in a predetermined time before stopping the applying of the rotary force. The main CPU 351 repeatedly performs such a series of force sense presenting processing more than once to present the first force sense.

Here, the normal rotation direction means the clockwise direction, for example, when the rotary operation device 13 is operated to rotate in the clockwise direction by an operator. The normal rotation direction means the counterclockwise direction when the rotary operation device 13 is operated to rotate in the counterclockwise direction by an operator. Moreover, the reverse rotation direction means the counterclockwise direction when the rotary operation device 13 is operated to rotate in the clockwise direction by an operator. The reverse rotation direction means the clockwise direction when the rotary operation device 13 is operated to rotate in the counterclockwise direction by an operator.

Moreover, the main CPU 351 is configured to change the way of presenting the first force sense at first switching angles and second switching angles among a plurality of switching angles.

To put it concretely, when the rotation angle of the rotary operation device 13 reaches a first switching angle corresponding to a first selection item, the main CPU 351 makes a rotating time (the predetermined time mentioned above) shorter than that when the rotation angle of the rotary operation device 13 reaches a second switching angle corresponding to a second selection item, and increases the number of times of repeating the force sense presenting processing. Thereby, the main CPU 351 changes the way of presenting the first force sense so that an operator can distinguishably perceive to which of the first selection items and the second selection items the selection item under selection by the operator belongs.

To put it more concretely, the main CPU 351 has previously discriminated between, for example, the first selection items (for example, "telephone," "mail," "WEB," "music," and "map") for selecting the functions having high frequencies in use by an operator among a plurality of functions listed in the "main menu screen" and the second selection items for selecting the other functions.

For example, it is supposed that, for example, the selection item (selection item "telephone") arranged (1, 1) is focused as the selection item under selection at the time point when the screen displayed on the display panel 331 is switched to the main menu screen. Then, if the rotary operation device 13 has rotated by 60 degrees in the clockwise direction from the time point, the selection item under selection is switched to the selection item "mail." If the rotary operation device 13 has further rotated by 60 degrees in the clockwise direction (that is, the rotary operation device 13 has rotated by 120 degrees in the clockwise direction from the time point), the selection item under selection is switched to the selection item "address book." If the rotary operation device 13 has rotated by 180 degrees in the clockwise direction from the time point, the selection item under selection is switched to the selection item "calendar." If the rotary operation device 13 has rotated by 240 degrees in the clockwise direction from the time point, the selection item under selection is switched to the selection item "WEB." Consequently, in this case, the first switching angles are "60 degrees," "240 degrees," and the like corresponding to the first selection items "mail," "WEB," and the like, respectively, and the second switching angles are "120 degrees," "180 degrees," and the like corresponding to the second selection items "address book," and "calendar," and the like, respectively.

Here, the rotary force to be applied to the rotary operation device 13, the time for which the rotary operation device 13 is continued to be rotated (the "predetermined time" mentioned above), and the angle by which the rotary operation device 13 is rotated (the "predetermined angle" mentioned above) are arbitrary as long as they can present the first force sense to the operator. To put it concretely, for example, as the rotary force to be applied to the rotary operation device 13, rotary force ≥ 0.05 Ncm is preferable. As the times for which the rotary operation device 13 is continued to be rotated, 3 msec ≤ time ≤ 6 msec is preferable. As the angle by which the rotary operation device 13 is rotated, 1 degree ≤ angle ≤ 5 degrees is preferable.

The main CPU 351 functions as a first force sense presenting section by executing this first force sense presenting program 353b5.

The second force sense presenting program 353b6 enables the main CPU 351 to realize the function of presenting a force sense to an operator through the rotary operation device 13 by inputting a control signal to the control section 21 through the input/output section 22 to make the control section 21 output a drive signal to the piezoelectric element 163 of the ultrasonic motor 16.

To put it concretely, when the rotation angle of the rotary operation device 13 detected by the main CPU 351 that has executed the rotation detecting program 353b1 is within a first range situated on the reverse rotation direction side of a switching angle, the main CPU 351 applies a rotary force in the normal rotation direction to the rotary operation device 13. When the detected rotation angle of the rotary operation device 13 is within a second range situated on the normal rotation direction side of a switching angle, the main CPU 351 applies a rotary force in the reverse rotation direction to the rotary operation device 13. Thereby, the main CPU 351 presents a second force different from the first force to the operator through the rotary operation device 13. Hereby, the main CPU 351 gives the operator an assisting feeling and a breaking feeling to makes it easy to perform a rotation operation of according the rotation angle of the rotary operation device 13 to a switching angle.

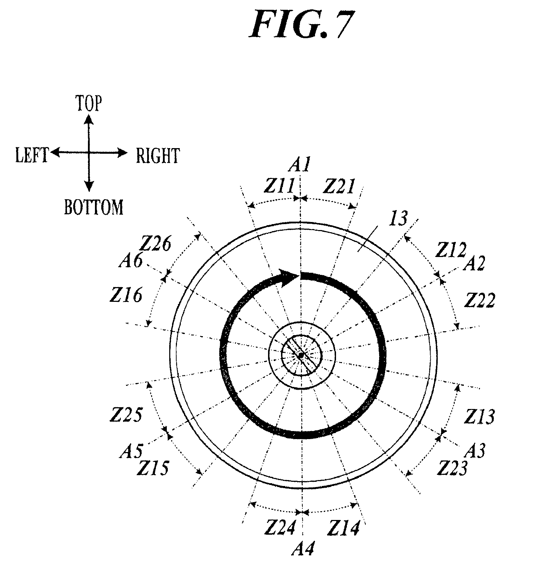

To put it more concretely, if each of the magnitudes of the first and second ranges is set to, for example, 20 degrees, and if an operator pushes a finger at a position of 12 o'clock of the rotary operation device 13 to start a rotation operation in the clockwise direction, then, for example, as shown in FIG. 7, the main CPU 351 applies a rotary force in the counterclockwise direction while the rotation angle of the rotary operation device 13 is within a second range (0 degree < second range ≤ 20 degrees) (that is, while the part pushed by the finger is within "Z21").

Furthermore, when the rotation angle enters a first range (+40 degrees ≤ first range < +60 degrees) (that is, the part pushed by the finger enters "Z12"), the main CPU 351 applies a rotary force in the clockwise direction. When the rotation angle reaches a switching angle (= +60 degrees) (that is, when the part pushed by the finger agrees with "A2"), the main CPU 351 presents the first force sense. When the rotation angle enters a second range (+60 degrees < second range ≤ +80 degrees) (that is, when the part pushed by the finger enters "Z22"), the main CPU 351 applies a rotary force in the counterclockwise direction.

Furthermore, when the rotation angle enters a first range (+100 degrees ≤ first range < +120 degrees) (that is, the part pushed by the finger enters "Z13"), the main CPU 351 applies a rotary force in the clockwise direction. When the rotation angle reaches a switching angle (= +120 degrees) (that is, the part pushed by the finger agrees with "A3"), the main CPU 351 presents the first force sense. When the rotation angle enters a second range (+120 degrees < second range ≤ +140 degrees) (that is, the part pushed by the finger enters "Z23"), the main CPU 351 applies a rotary force in the counterclockwise direction.

Then, if the rotary operation device 13 is furthermore operated to rotate in the clockwise direction, then the main CPU 351 performs the processing similar to that mentioned above.

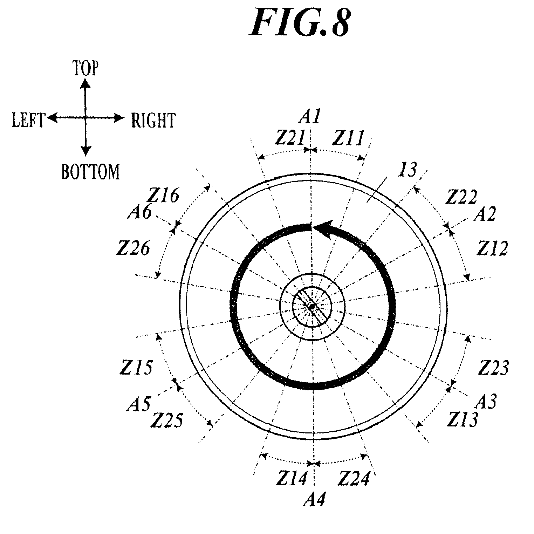

Moreover, when an operator pushes a finger at the position of 12 o'clock of the rotary operation device 13 to start a rotation operation in the counterclockwise direction, for example, as shown in FIG. 8, the main CPU 351 applies a rotary force in the clockwise direction while the rotation angle of the rotary operation device 13 is within a second range (0 degree > second range ≤ -20 degrees) (that is, while the part pushed by the finger is within "Z21").

Furthermore, when the rotation angle enters a first range (-40 degrees ≥ first range > -60 degrees) (that is, the part pushed by the finger enters "Z16"), the main CPU 351 applies a rotary force in the counterclockwise direction. When the rotation angle reaches a switching angle (= -60 degrees) (that is, when the part pushed by the finger agrees with "A6"), the main CPU 351 presents the first force sense. When the rotation angle enters a second range (-60 degrees > second range ≥ -80 degrees) (that is, when the part pushed by the finger enters "Z26"), the main CPU 351 applies a rotary force in the clockwise direction.

Furthermore, when the rotation angle enters a first range (-100 degrees ≥ first range > -120 degrees) (that is, the part pushed by the finger enters "Z15"), the main CPU 351 applies a rotary force in the counterclockwise direction. When the rotation angle reaches a switching angle (= -120 degrees) (that is, the part pushed by the finger agrees with "A5"), the main CPU 351 presents the first force sense. When the rotation angle enters a second range (-120 degrees > second range ≥ -140 degrees) (that is, the part pushed by the finger enters "Z25"), the main CPU 351 applies a rotary force in the clockwise direction.

Then, if the rotary operation device 13 is furthermore operated to rotate in the counterclockwise direction, then the main CPU 351 performs the processing similar to that mentioned above.

Here, when a detected rotation angle is within a first range situated on the reverse rotation direction side of a switching angle, the main CPU 351 enlarges the rotary force in the normal direction, which rotary force is applied to the rotary operation device 13, as the detected rotation angle approaches the switching angle. When the detected rotation angle is within a second range situated on the normal rotation direction side of a switching angle, the main CPU 351 lessens the rotary force in the reverse rotation direction, which rotary force is applied to the rotary operation device 13, as the detected rotation angle becomes more distant from the switching angle.

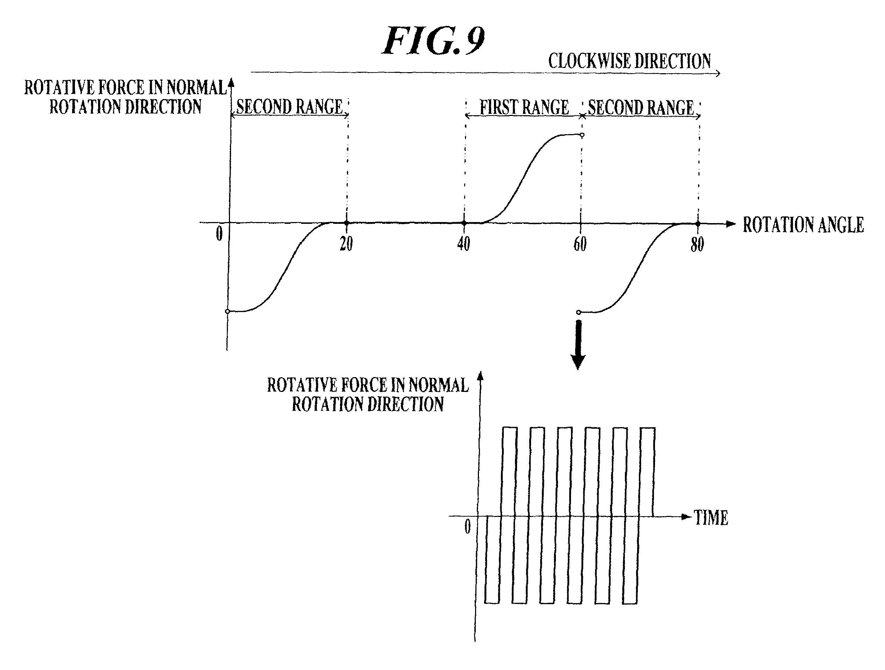

To put it more concretely, when the rotary operation device 13 is rotated in the clockwise direction by an operator, for example, as shown in FIG. 9, the main CPU 351 is configured to enlarges the rotary force in the normal rotation direction (clockwise direction) to be applied to the rotary operation device 13 as the rotation angle of the rotary operation device 13 approaches a switching angle (= +60 degrees) while the rotation angle of the rotary operation device 13 is within a first range (+40 degrees ≤ first range < +60 degrees). The main CPU 351 is also configured to lessen the rotary force in the reverse rotation direction (counterclockwise direction) to be applied to the rotary operation device 13 as the rotation angle of the rotary operation device 13 becomes more distant from a switching angle (= +60 degrees) while the rotation angle of the rotary operation device 13 is within a second range (+60 degrees < second range ≤ +80 degrees). Then, at the switching angle (= +60 degrees), the main CPU 351 executes the first force sense presenting program 353b5 to repeatedly perform the force sense presenting processing more than once (six times in FIG. 9), and thereby the main CPU 351 presents the first force senses.

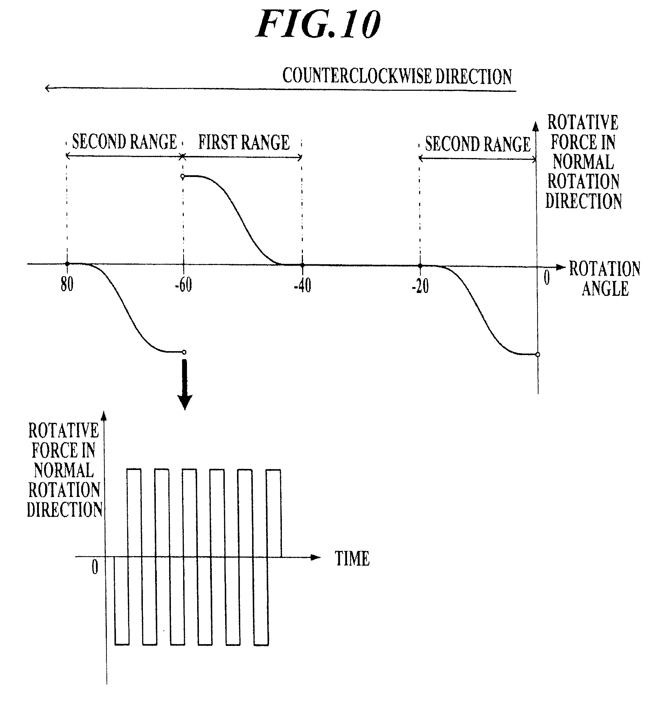

Moreover, when the rotary operation device 13 is rotated in the counterclockwise direction by an operator, for example, as shown in FIG. 10, the main CPU 351 is configured to enlarges the rotary force in the normal rotation direction (counterclockwise direction) to be applied to the rotary operation device 13 as the rotation angle of the rotary operation device 13 approaches a switching angle (= -60 degrees) while the rotation angle of the rotary operation device 13 is within a first range (-40 degrees ≥ first range > -60 degrees). The main CPU 351 is also configured to lessen the rotary force in the reverse rotation direction (clockwise direction) to be applied to the rotary operation device 13 as the rotation angle of the rotary operation device 13 becomes more distant from a switching angle (= -60 degrees) while the rotation angle of the rotary operation device 13 is within a second range (-60 degrees > second range ≥ -80 degrees). Then, at the switching angle (= -60 degrees), the main CPU 351 executes the first force sense presenting program 353b5 to repeatedly perform the force sense presenting processing more than once (six times in FIG. 9), and thereby the main CPU 351 presents the first force senses.

Moreover, the main CPU 351 is configured to change the way of presenting the second force senses by the first and second switching angles among the plurality of switching angles.

To put it concretely, if a rotating angle of the rotary operation device 13 is within a first range on the reverse rotation direction side of a first switching angle corresponding to a first selection item, then the main CPU 351 makes the rotary force to be applied larger than that in the case where the rotation angle of the rotary operation device 13 is within a first range on the reverse rotation direction side of a second switching angle corresponding to a second selection item. If a rotating angle of the rotary operation device 13 is within a second range on the normal rotation direction side of a first switching angle corresponding to a first selection item, then the main CPU 351 makes the rotary force to be applied larger than that in the case where the rotation angle of the rotary operation device 13 is within a second range on the normal rotation direction side of a second switching angle corresponding to a second selection item. Thereby, the main CPU 351 changes the way of presenting the second forces so that an operator can perceive a selection item under selection is a first selection item or a second selection item distinguishably.

Here, the rotary forces to be applied to the rotary operation device 13, the times for which the rotary operation device 13 is continued to rotate (the "predetermined times" mentioned above), the angles by which the rotary operation device 13 is rotated (the "predetermined angles" mentioned above) are arbitrary as long as they can present the second force senses to the operator. To put it concretely, for example, as a rotary force to be applied to the rotary operation device 13, rotary force ≥ 0.05 Ncm is preferable; as a time for which the rotary operation device 13 is rotated, 3 msec ≤ time≤ 6 msec is preferable; as an angle by which the rotary operation device 13 is rotated, 1 degree ≤ angle ≤ 5 degrees is preferable.

The main CPU 351 functions as a second force sense presenting section by executing this second force sense presenting program 353b6.

The third force sense presenting program 353b7 enables the main CPU 351 to realize the function of presenting a force sense to an operator through the rotary operation device 13 by inputting a control signal into the control section 21 through the input/output section 22 to make the control section 21 output a drive signal to the piezoelectric element 163 of the ultrasonic motor 16.

To put it concretely, when the main CPU 351 that has executed the navigation program 353b4 a predetermined route R from a start point R1 to an end point R2 and a point P showing the current position are displayed on the display panel 331 of the display section 33, the main CPU 351 applies a rotary force in the clockwise direction to the rotary operation device 13 if the route R displayed on the display panel 331 is in a rightward direction when the point P displayed on the display panel 331 is on a branch point D. If the route R displayed on the display panel 331 is in a leftward direction, the main CPU 351 applies a rotation force in the counterclockwise direction to the display panel 331. If the route R displayed on the display panel 331 is in a direct advance direction, the main CPU 351 applies a rotary force in a direction of repelling a rotation in the clockwise direction and the counterclockwise direction to the rotary operation device 13. Thereby the main CPU 351 presents a third force sense to an operator through the rotary operation device 13, and navigates the route R to the end point R2 (destination point) to the operator.

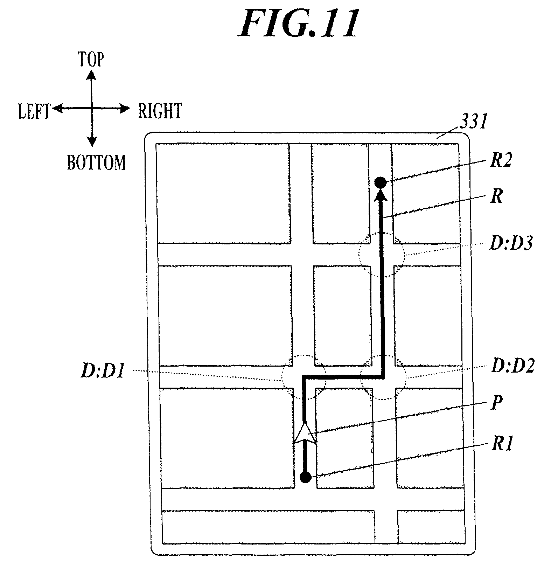

To put it more concretely, it is supposed that, for example, a screen shown in FIG. 11 is displayed on the display panel 331 by the main CPU 351 that has executed the navigation program 353b4. When the point P has moved to reach a branch point D1 as an operator has moved, the main CPU 351 once performs a series of force sense presenting processing of applying a rotary force to the rotary operation device 13 in the clockwise direction to rotate the rotary operation device 13 in the clockwise direction by 90 degrees because the route R exists rightward of the direct advance direction by 90 degrees before stopping applying the rotary force. Next, when the point P has moved to reach a branch D2 as the operator has moved, the main CPU 351 once performs a series of force sense presenting processing of applying a rotary force to the rotary operation device 13 in the counterclockwise direction to rotate the rotary operation device in the counterclockwise direction by 90 degrees because the route R exists leftward of the direct advance direction by 90 degrees before stopping applying the rotary force. Next, when the point P has moved to reach a branch point D3 as the operator has moved, the main CPU 351 performs force sense presenting processing of applying a rotary force in the direction of repelling a rotation operation because the route R is in the direct advance direction until the point P has exited from the branch point D3, and thus presents a third force sense.

Here, the rotary forces to be applied to the rotary operation device 13 are arbitrary as long as they can present a third force sense to an operator. To put it concretely, for example, as a rotary force to be applied to the rotary operation device 13, rotary force ≥0.05 Ncm is preferable.

The main CPU 351 functions as a third force sense presenting section by executing this third force sense presenting program 353b6.

Here, in the present embodiment, the rotary input device 10 includes the main control section 35 besides the rotation detecting section 14, the ultrasonic motor 16, the depression detecting section 20, the control section 21, the input/output section 22, and the like.

### (First and Second Force Senses Presenting Processing)

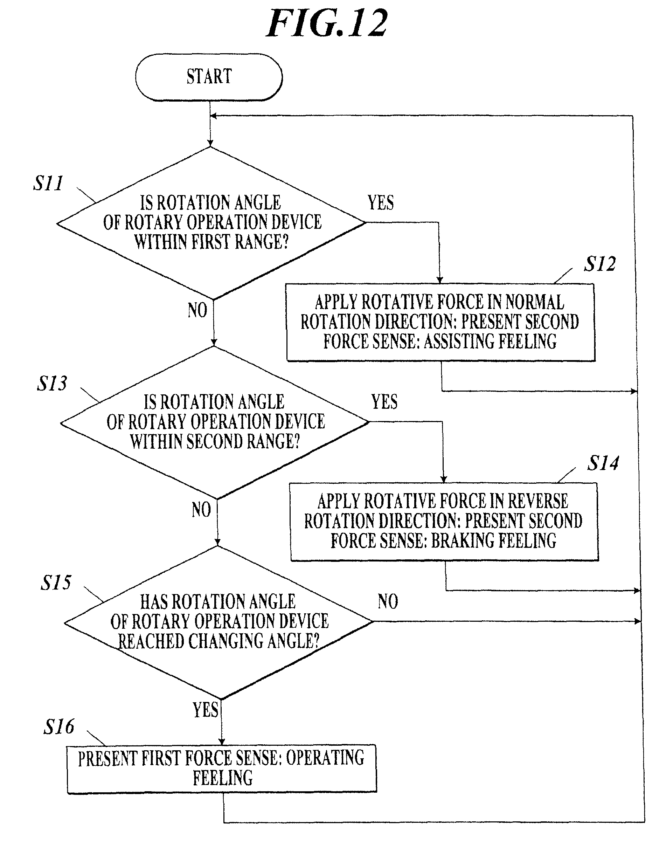

Next, the processing pertaining to the presentation of a first and a second force senses by the cellular phone handset 1 of the present embodiment will be descried with reference to FIG. 12.

First, the main CPU 351 judges whether a detected rotation angle of the rotary operation device 13 is within a first range existing on the reverse rotation side of a switching angle or not (Step S11).

If the main CPU 351 judges that the detected rotation angle of the rotary operation device 13 is within the first range at Step S11 (Step S11; Yes), then the main CPU 351 applies a rotary force in the normal rotation direction to the rotary operation device 13 by executing the second force sense presenting program 353b6 to present a second force sense, and thereby gives the operator of the rotary operation device 13 an assisting feeling (Step S12), and performs the processing on and after Step S11 repeatedly.

On the other hand, if the main CPU 351 judges that the detected rotation angle of the rotary operation device 13 is not within the first range at Step S11 (Step S11; No), then the main CPU 351 judges whether the rotation angle of the rotary operation device 13 is within a second range existing on the normal rotation direction side of a switching angle or not (Step S13).

If the main CPU 351 judges that the detected rotation angle of the rotary operation device 13 is within a second range at Step S13 (Step S13; Yes), the main CPU 351 executes the second force sense presenting program 353b6 to apply a rotary force in the reverse rotation direction to the rotary operation device 13, and thereby presents a second force sense. The main CPU 351 thus gives the operator a breaking feeling (Step S14), and performs the processing on and after Step S11 repeatedly.

On the other hand, if the main CPU 351 judges that the detected rotation angle of the rotary operation device 13 is not within any second range at Step S13 (Step S13; No), then the main CPU 351 judges whether the detected rotation angle of the rotary operation device 13 has reached a switching angle or not (Step S15).

If the main CPU 351 judges that the detected rotation angle of the rotary operation device 13 has reached a switching angle at Step S15 (Step S15; Yes), then the main CPU 351 executes the first force sense presenting program 353b5 to present first force senses by the combination of applying a rotary force in the normal rotation direction to the rotary operation device 13, applying a rotary force in the reverse rotation direction to the rotary operation device 13, and stopping applying the rotary force, and thereby gives the operator an operating feeling (Step S16). Then, the main CPU 351 repeatedly performs the processing on and after Step S11.

On the other hand, if the main CPU 351 judges that the detected rotation angle of the rotary operation device 13 has not reached any switching angle at Step S15 (Step S15; No), the main CPU 351 repeatedly performs the processing on and after Step S11.

### (Third Force Sense Presenting Processing)

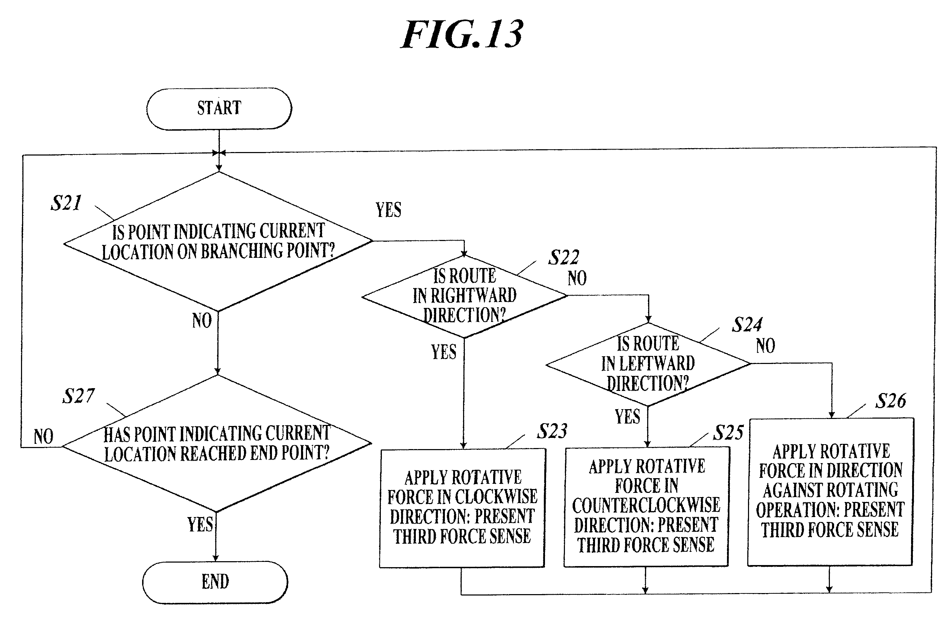

Next, the processing pertaining to the presentation of a third force sense by the cellular phone handset 1 of the present embodiment will be described with reference to FIG. 13.

First, when the predetermined route R from the start point R1 to the end point R2 and the point P showing the current position are displayed on the display panel 331 by the main CPU 351 that has executed the navigation program 353b4, the main CPU 351 judges whether the point P showing the current position is situated on a branch point D in the route R or not (Step S21).

If the main CPU 351 judges that the point P showing the current position is situated on the branch point D in the route R at Step S21 (Step S21; Yes), then the main CPU 351 judges whether the route R is situated rightward of the direct advance direction or not (Step S22).

If the main CPU 351 judges that the route R is situated rightward of the direct advance direction at Step S22 (Step S22; Yes), then the main CPU 351 executes the third force sense presenting program 353b7 to apply a rotary force in the clockwise direction to the rotary operation device 13 to present a third force sense (Step S23), and repeatedly performs the processing on and after Step S21.

On the other hand, if the main CPU 351 judges that the route R is not situated rightward of the direct advance direction Step S22 (Step S22; No), then the main CPU 351 judges whether the route R is situated on leftward of the direct advance direction or not (Step S24).

If the main CPU 351 judges that the route R is situated leftward of the direct advance direction at Step S24 (Step S24; Yes), then the main CPU 351 executes the third force sense presenting program 353b7 to apply a rotary force in the counterclockwise direction to the rotary operation device 13, and thereby present a third force sense (Step S25). Then, the main CPU 351 repeatedly performs the processing on and after Step S21.

On the other hand, if the main CPU 351 judges that the rout R is not situated leftward of the direct advance direction Step S24 (Step S24; No), then the main CPU 351 judges that the route R is situated on the direct advance direction, and executes the third force sense presenting program 353b7 to apply to the rotary operation device 13 a rotary force in the direction of repelling any rotation operation of the rotary operation device 13 by the operator, and thereby presents a third force sense (Step S26). Then, the main CPU 351 repeatedly performs the processing on and after Step S21.

Moreover, if the main CPU 351 judges that the point P showing the current position is not situated on the branch point D on the route R at Step S21 (Step S21; No), then the main CPU 351 judges whether the point P showing the current position has reached the end point R2 or not (Step S27).

If the main CPU 351 judges that the point P showing the current position has not yet reached the end point R2 at Step S27 (Step S27; No), then the main CPU 351 repeatedly performs the processing on and after Step S21.

On the other hand, if the main CPU 351 judges that the point P showing the current position has reached the end point R2 at Step S27 (Step S27; Yes), the main CPU 351 ends the present processing.

According to the cellular phone handset 1 of the present embodiment described above, a rotary input device comprises: a rotary operation device 13 rotatable around a shaft by receiving a rotation operation of an operator; a rotation detection section 14 to detect a rotation angle of the rotary operation device 13 and a main CPU 351 executing a rotation detecting program 353b1; the main CPU 351 executing a display control program 353b3 to make a display section 33 display predetermined display information and switch a display state of the predetermined display information in conjunction with rotation of the rotary operation device 13; an ultrasonic motor 16 to apply a rotary force to the rotary operation device 13; the main CPU 351 executing a first force sense presenting program 353b5 to present a first force sense to the operator through the rotary operation device by a combination of at least any two of applying a rotary force in a normal rotation direction to the rotary operation device 13 by the ultrasonic motor 16, applying a rotary force in a reverse rotation direction to the rotary operation device 13, and stopping applying the rotary force to the rotary operation device 13 when the rotation angle of the rotary operation device 13 detected by the rotation detecting section 14 and the main CPU 351 that has executed the rotation detecting program 353b1 reaches a predetermined switching angle corresponding to the predetermined display information displayed on the display section; and the main CPU 351 executing a second force sense presenting program 353b6 to present a second force sense different from the first force sense to the operator through the rotary operation device 13 by applying the rotary force in the normal rotation direction the rotary operation device 13 by the ultrasonic motor 16 when the rotation angle of the rotary operation device 13 detected by the rotation detecting section 14 and the main CPU 351 executing the rotation detecting program 353b1 is within a first range situated on a reverse rotation direction side of the predetermined switching angle, and by applying the rotary force in the reverse rotation direction to the rotary operation device 13 by the ultrasonic motor 16 when the rotation angle of the rotary operation device 13 detected by the rotation detecting section 14 and the main CPU 351 executing the rotation detecting program 353b1 is within a second range situated on a normal rotation direction side of the predetermined switching angel.

That is, the rotary input device can present the second force sense to the operator by applying the rotary force in the normal rotation direction when the rotation angle of the rotary operation device 13 is within the first range, and by applying the rotary force in the reverse rotation direction to the operator when the rotation angle of the rotary operation device 13 is within the second range, and thereby the rotary input device can give the operator an assisting feeling and a breaking feeling. Furthermore, when the rotation angle of the rotary operation device 13 reaches the switching angle, the rotary input device can present the first force sense to the operator. Consequently, the rotary input device can give the operator a more distinct operating feeling at the timing when the rotation angle of the rotary operation device 13 reaches a switching angle.

Moreover, according to the cellular phone handset 1 of the present embodiment described above, the main CPU 351 executing the second force sense presenting program 353b6 enlarges the rotary force in the normal rotation direction to be applied to the rotary operation device 13 by the ultrasonic motor 16 as the rotation angle of the rotary operation device 13 detected by the rotation detecting section 14 and the main CPU 351 that has executed the rotation detecting program 353b1 approaches the switching angle when the rotation angle of the rotary operation device 13 detected by the detection section 14 and the main CPU 351 that has executed the rotation detecting program 353b1 is within the first range situated on the reverse rotation direction side of the switching angle, and the main CPU 351 executing the second force sense presenting program 353b6 lessens the rotary force in the reverse rotation direction to be applied to the rotary operation device 13 by the ultrasonic motor 16 as the rotation angle of the rotary operation device 13 detected by the rotation detecting section and the main CPU 351 that has executed the rotation detecting program 353b1 becomes more distant from the switching angle when the rotation angle detected by the rotation detecting section 14 and the main CPU 351 that has executed the rotation detecting program 353b1 is within the second range situated on the normal rotation direction side of the switching angle.

That is, by presenting the second force sense to the operator, it is possible to give the operator a sense that the rotation angle of the rotary operation device 13 sticks to the switching angle.

Moreover, according to the cellular phone handset 1 of the present embodiment described above, a plurality of the switching angles is provided, and the main CPU 351 executing the first force sense presenting program 353b5 and the main CPU 351 executing the second force sense presenting program 353b6 changes the ways of presenting the first force sense and the second force sense by a first switching angle and a second switching angle among the plurality of switching angles.

To put it concretely, the ways of presenting the first force sense and the second force sense are changed between the case where the rotation angle of the rotary operation device 13 reaches a first switching angle corresponding to a first selection item and the case where the rotation angle of the rotary operation device 13 reaches a second switching angle corresponding to a second selection item.

Consequently, the display state (for example, the selection item under selection is a first selection item or a second selection item) of display information can be recognized by an operator intuitively.

Moreover, according to the cellular phone handset 1 of the present embodiment, a rotary input device further includes: the main CPU 351 executing a navigation program 353b4 to make the display section 33 display a predetermined route R from a start point R1 to an end point R2 and a point P showing a current position; and the main CPU 351 executing a third force sense presenting program 353b7 to present a third force sense to the operator through the rotary operation device 13 by applying a rotary force in a clockwise direction to the rotary operation device 13 by the ultrasonic motor 16 if the route R displayed on the display section 33 is in a rightward direction when the point P displayed on the display section 33 is situated on a branch point D, by applying a rotary force in a counterclockwise direction to the rotary operation device 13 by the ultrasonic motor 16 if the route R displayed on the display section 33 is in a leftward direction, and by applying to the rotary operation device 13 a rotary force in a direction of repelling any rotation in the clockwise direction and the counterclockwise direction by the ultrasonic motor 16 if the route R displayed on the display section 33 is in a direct advance direction.

Consequently, it is possible to make an operator perceive a route to the end point R2 (destination point) not only by visual sensation but also by a sense.

Incidentally, the present invention is not limited to the embodiment described above, but can suitably be changed without departing the sprit and scope thereof.

Although the cellular phone handset 1 has been illustrated as electronic equipment equipped with the rotary input device according to the present invention in the embodiment described above, the electronic equipment of the present invention is not limited to the cellular phone handset 1, but the present invention can applied to any electronic equipment as long as the electronic equipment can perform input operations by the rotary input device 10. The rotary input device 10 of the present invention may be applied to, for example, the other portable terminal devices, such as a portable audio player and a personal digital assistance (PDA), audio visual (AV) equipment, such as a television receiver, and a personal computer. Moreover, the rotary input device 10 may previously be incorporated in electronic equipment, or may be used by being connected to electronic equipment as an external device as a single body.

Moreover, although the optical rotation detecting section 14 composed of a toric code wheel and a photointerrupter as the detection section detecting the rotation angle of the rotary operation device 13 has been illustrated in the embodiment described above, the rotation detecting section 14 is an example of the detection section, and any configuration may be used as long as the configuration can detect the rotation positions of the rotary operation device 13. For example, a mechanical type (contact type) rotation detecting section, a magnetic type one, an electrostatic type one performing position detection by means of an electrostatic capacity change of an electrode, and the like can be used.

Furthermore, an absolute type rotary encoder capable of detecting an absolute position in addition to the rotation quantity and the rotation direction of the rotary operation device 13 may be used.

Moreover, although the ultrasonic motor 16 has been illustrated as the rotation driving section to perform the rotation driving of the rotary operation device 13 in the embodiment described above, the ultrasonic motor 16 is an example of the rotation driving section, and any configuration can be used as long as the configuration can perform the rotation driving of the rotary operation device 13. For example, a static actuator performing driving by using the mutual absorption and repellence of electrostatic charges as motive power, an electromagnetic actuator performing driving by using a force caused by mutual interaction between a magnetic field and electric power, a magnetostrictive actuator, a hydraulic cylinder, a pneumatic cylinder, and the like can be used. Moreover, the drive control of the rotation driving section may be the control of transmitting the motive power of an actuator to a driven body, such as the rotary operation device 13, as it is, or may be the one using a stepping motor operating in proportion to a drive pulse number. Moreover, an actuator performing driving by rotating a driven body may be used, or a linear actuator performing the driving by linearly moving a driven body may be used.

Moreover, although the main menu screen containing icons, showing the respective selection items, arranged in a matrix of 4 x 3 has been illustrated as a screen displayed on the display panel 331 of the display section 33 in the embodiment described above, but the main menu screen is not limited to the one described above. The screen (image) displayed on the display panel 331 is arbitrary, and, for example, the image based on the image information obtained by the camera function of the cellular phone handset 1, and the like may be used.

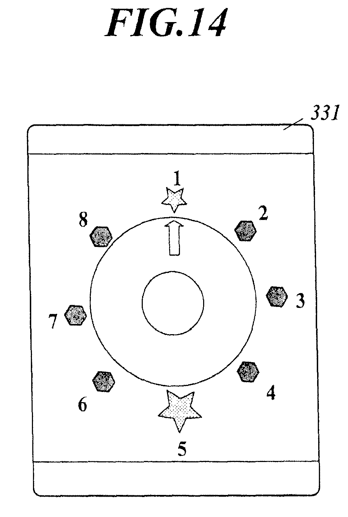

Moreover, the first selection items (selection items for selecting the functions having high frequencies in use by an operator) have been illustrated as the selection items corresponding to the first switching angles, and second selection items (selection items for selecting the other functions) have been illustrated as the second items corresponding to the second switching angles in the embodiment described above, but the selection items are not limited to those mentioned above. For example, in a display screen shown in FIG. 14, the selection items corresponding to the first switching angles may be the selection items (selections items denoted by starlike marks) having high degrees of importance, and the selection items corresponding to the second switching angles may be the selection items (selection items denoted by hexagonal marks) having low degrees of importance.

Moreover, although both of the ways of presenting the first force sense and presenting the second force sense are changed at each of the first switching angles and each of the second switching angles in the embodiment described above, the presentation way is not limited to those mentioned above. Only one of the ways of presenting the first force sense and the second force sense at each of the first switching angles and each of the second switching angles may be changed.

Moreover, the plurality of switching angles may be classified into three or more groups, and the way of presenting the first force senses and/or the second force senses may be changed every group.

Moreover, although the switching angles are set as multiples of 60 degrees in the embodiment described above, the switching angles are not limited to those angles. The switching angles are arbitrary, and, for example, may be changed according to the kind of an image, a display state, and the like. For example, the switching angles may be changed every screen (image) according to the kinds of screens (images), or may be changed every selection item according to the kinds of selection items.

Moreover, although the magnitudes of the first and second ranges are severally set as 20 degrees in the embodiment described above, the magnitudes are not limited to 20 degrees. The magnitudes of the first and second ranges are arbitrary. For example, the magnitudes may be changed every screen (image) according to the kinds of the screens (images), and may be changed every selection item according to the kinds of the selection items. Moreover, the magnitudes of the first ranges and the second ranges may not be equal to each other.

Moreover, although the depression detecting section 20 is equipped with four pressure sensors 201 fixated at four positions on the top side, the bottom side, the left side, and the right side on the back surface of the PCB substrate 182 in the embodiment described above, the pressure sensors are not limited to those ones. The number and the fixation positions of the pressure sensors 201 with which the depression detecting section 20 is equipped are arbitrary as long as the pressure sensors 201 can detect at least the depressions of the upper side part, the lower side part, the left side part, and the right side part of the rotary operation device 13.

Moreover, the way of presenting the first force sense and the way of changing the way of presenting the first force sense are not limited to those of the embodiment described above, but the ways are arbitrary as long as they can present the first force sense by the combination of at least any two of applying a rotary force in the clockwise direction to the rotary operation device 13, applying a rotary force in the counterclockwise direction, and stopping applying the rotary force.

Moreover, the way of presenting the second force sense and the way of changing the way of presenting the second force sense are not limited to those of the embodiment described above, but the ways are arbitrary as long as they can present the second force sense different from the first force sense by applying a rotary force in the normal rotation direction to the rotary operation device 13 when the rotation angle of the rotary operation device 13 is within the first range, and by applying a rotary force in the reverse rotation direction to the rotary operation device 13 when the rotation angle of the rotary operation device 13 is within the second range.

Moreover, the embodiment is configured to enlarge the rotary force in the normal rotation direction to be applied as the rotation angle approaches a switching angle when the rotation angle of the rotary operation device 13 is within the first range, and to lessen the rotary force in the reverse rotation direction to be applied as the rotation angle becomes more distant from a switching angle when the rotation angle of the rotary operation device 13 is within the second range. However, the method of changing the rotary force is not limited to the one mentioned above.

For example, the rotary force in the normal rotation direction to be applied may be constant, and the rotary force in the normal rotation direction may be lessened as the rotation angle approaches a switching angle. Moreover, the rotary force in the reverse rotation direction to be applied may be constant, and the rotary force in the reverse rotation direction may be enlarged when the rotary angle becomes more distant from a switching angle.

Moreover, although the selection item under selection is switched in conjunction with the rotation of the rotary operation device 13 in the embodiment described above, the switching of the selection item under selection is not limited to the above-mentioned method. For example, the magnification ratio of the image under display may be switched in conjunction with the rotation of the rotary operation device 13 as long as the display state of predetermined display information can be switched in conjunction with the rotation of the rotary operation device 13.

According to the embodiment, there is provided a rotary input device, including: a rotary operation device rotatable around a shaft by receiving a rotation operation of an operator; a detection section to detect a rotation angle of the rotary operation device; a display control section to make a display section display predetermined display information and switch a display state of the predetermined display information in conjunction with rotation of the rotary operation device; a rotation driving section to apply a rotary force to the rotary operation device; a first force sense presenting section to present a first force sense to the operator through the rotary operation device by a combination of at least any two of applying a rotary force in a normal rotation direction to the rotary operation device by the rotation driving section, applying a rotary force in a reverse rotation direction to the rotary operation device, and stopping applying the rotary force to the rotary operation device when the rotation angle detected by the detection section reaches a predetermined switching angle corresponding to the predetermined display information displayed on the display section; a second force sense presenting section to present a second force sense different from the first force sense to the operator through the rotary operation device by applying the rotary force in the normal rotation direction to the rotary operation device by the rotation driving section when the rotation angle detected by the detection section is within a first range situated on a reverse rotation direction side of the predetermined switching angle, and by applying rotary force in the reverse rotation direction to the rotary operation device the by the rotation driving section when the rotation angle detected by the detection section is within a second range situated on a normal rotation direction side of the predetermined switching angel.

Preferably, the second force sense presenting section enlarges the rotary force in the normal rotation direction to be applied to the rotary operation device by the rotation driving section as the rotation angle detected by the detection section approaches the predetermined switching angle when the rotation angle detected by the detection section is within the first range situated on the reverse rotation direction side of the predetermined switching angle, and the second force sense presenting section lessens the rotary force in the reverse rotation direction to be applied to the rotary operation device by the rotation driving section as the rotation angle detected by the detection section becomes more distant from the predetermined switching angle when the rotation angle detected by the detection section is within the second range situated on the normal rotation direction side of the predetermined switching angle.

Preferably, a plurality of the predetermined switching angles is provided, and the first force sense presenting section and/or the second force sense presenting section changes ways of presenting the first force sense and/or the second force sense by a first predetermined switching angle and a second predetermined switching angle among the plurality of predetermined switching angles.

Preferably, the rotary input device further including: a second display control section to make the display section display a predetermined route from a start point to an end point and a point showing a current position; and a third force sense presenting section to present a third force sense to the operator through the rotary operation device by applying a rotary force in a clockwise direction to the rotary operation device by the rotation driving section if the route displayed on the display section is in a rightward direction when the point displayed on the display section is situated on a branch point, by applying a rotary force in a counterclockwise direction to the rotary operation device by the rotation driving section if the route displayed on the display section is in a leftward direction when the point displayed on the display section is situated on the branch point, and by applying to the rotary operation device a rotary force in a direction of repelling any rotation in the clockwise direction and the counterclockwise direction by the rotation driving section if the route displayed on the display section is in a direct advance direction when the point displayed on the display section is situated on the branch point.

There is also provided electronic equipment, including: the rotary input device; and the display section.

There is also provided Electronic equipment, including: a rotary input device; and a display section, wherein the rotary input device including: a rotary operation device rotatable around a shaft by receiving a rotation operation of an operator; a detection section to detect a rotation angle of the rotary operation device; a first display control section to make the display section display predetermined display information and switch a display state of the predetermined display information in conjunction with rotation of the rotary operation device; a rotation driving section to apply a rotary force to the rotary operation device; a first force sense presenting section to present a first force sense to the operator through the rotary operation device by a combination of at least any two of applying a rotary force in a normal rotation direction to the rotary operation device by the rotation driving section, applying a rotary force in a reverse rotation direction to the rotary operation device, and stopping applying the rotary force to the rotary operation device when the rotation angle detected by the detection section reaches a predetermined switching angle corresponding to the predetermined display information displayed on the display section; a second force sense presenting section to present a second force sense different from the first force sense to the operator through the rotary operation device by applying the rotary force in the normal rotation direction to the rotary operation device by the rotation driving section when the rotation angle detected by the detection section is within a first range situated on a reverse rotation direction side of the predetermined switching angle, and by applying the rotary force in the reverse rotation direction to the rotary operation device by the rotation driving section when the rotation angle detected by the detection section is within a second range situated on a normal rotation direction side of the predetermined switching angel; a second display control section to make the display section display a predetermined route from a start point to an end point and a point showing a current position; and a third force sense presenting section to present a third force sense to the operator through the rotary operation device by applying a rotary force in a clockwise direction to the rotary operation device by the rotation driving section if the route displayed on the display section is in a rightward direction when the point displayed on the display section is situated on a branch point, by applying a rotary force in a counterclockwise direction to the rotary operation device by the rotation driving section if the route displayed on the display section is in a leftward direction when the point displayed on the display section is situated on the branch point, and by applying to the rotary operation device a rotary force in a direction of repelling any rotation in the clockwise direction and the counterclockwise direction by the rotation driving section if the route displayed on the display section is in a direct advance direction when the point displayed on the display section is situated on the branch point, wherein the second force sense presenting section enlarges the rotary force in the normal rotation direction to be applied to the rotary operation device by the rotation driving section as the rotation angle detected by the detection section approaches the predetermined switching angle when the rotation angle detected by the detection section is within the first range situated on the reverse rotation direction side of the predetermined switching angle, and the second force sense presenting section lessens the rotary force in the reverse rotation direction to be applied to the rotary operation device by the rotation driving section as the rotation angle detected by the detection section becomes more distant from the predetermined switching angle when the rotation angle detected by the detection section is within the second range situated on the normal rotation direction side of the predetermined switching angle; and the first force sense presenting section and/or the second force sense presenting section changes ways of presenting the first force sense and/or the second force sense by a first predetermined switching angle and a second predetermined switching angle among the plurality of predetermined switching angles.

According to the present invention, it is possible to present a second force sense to an operator to give the operator an assisting feeling and a breaking feeling by applying a rotary force in the normal rotation direction when the rotation angle of the rotary operation device 13 is within the first range, and by applying a rotary force in the reverse rotation direction when the rotation angle of the rotary operation device 13 is within the second range. Furthermore, it is possible to present a first force sense to the operator when the rotation angle of the rotary operation device 13 reaches a switching angle. Consequently, a more distinct operating feeling can be given to the operator when the rotation angle of the rotary operation device 13 reaches a switching angle.

## Claims

1. A rotary input device, comprising:
a rotary operation device rotatable around a shaft by receiving a rotation operation of an operator;
a detection section to detect a rotation angle of the rotary operation device;
a display control section to make a display section display predetermined display information and switch a display state of the predetermined display information in conjunction with rotation of the rotary operation device;
a rotation driving section to apply a rotary force to the rotary operation device;
a first force sense presenting section to present a first force sense to the operator through the rotary operation device by a combination of at least any two of applying a rotary force in a normal rotation direction to the rotary operation device by the rotation driving section, applying a rotary force in a reverse rotation direction to the rotary operation device, and stopping applying the rotary force to the rotary operation device when the rotation angle detected by the detection section reaches a predetermined switching angle corresponding to the predetermined display information displayed on the display section;
a second force sense presenting section to present a second force sense different from the first force sense to the operator through the rotary operation device by applying the rotary force in the normal rotation direction to the rotary operation device by the rotation driving section when the rotation angle detected by the detection section is within a first range situated on a reverse rotation direction side of the predetermined switching angle, and by applying rotary force in the reverse rotation direction to the rotary operation device the by the rotation driving section when the rotation angle detected by the detection section is within a second range situated on a normal rotation direction side of the predetermined switching angel.

2. The rotary input device according to claim 1,
wherein the second force sense presenting section enlarges the rotary force in the normal rotation direction to be applied to the rotary operation device by the rotation driving section as the rotation angle detected by the detection section approaches the predetermined switching angle when the rotation angle detected by the detection section is within the first range situated on the reverse rotation direction side of the predetermined switching angle, and the second force sense presenting section lessens the rotary force in the reverse rotation direction to be applied to the rotary operation device by the rotation driving section as the rotation angle detected by the detection section becomes more distant from the predetermined switching angle when the rotation angle detected by the detection section is within the second range situated on the normal rotation direction side of the predetermined switching angle.

3. The rotary input device according to claim 1 or 2, wherein
a plurality of the predetermined switching angles is provided, and
the first force sense presenting section and/or the second force sense presenting section changes ways of presenting the first force sense and/or the second force sense by a first predetermined switching angle and a second predetermined switching angle among the plurality of predetermined switching angles.

4. The rotary input device according to any one of claims 1-3, further comprising:
a second display control section to make the display section display a predetermined route from a start point to an end point and a point showing a current position; and
a third force sense presenting section to present a third force sense to the operator through the rotary operation device by applying a rotary force in a clockwise direction to the rotary operation device by the rotation driving section if the route displayed on the display section is in a rightward direction when the point displayed on the display section is situated on a branch point, by applying a rotary force in a counterclockwise direction to the rotary operation device by the rotation driving section if the route displayed on the display section is in a leftward direction when the point displayed on the display section is situated on the branch point, and by applying to the rotary operation device a rotary force in a direction of repelling any rotation in the clockwise direction and the counterclockwise direction by the rotation driving section if the route displayed on the display section is in a direct advance direction when the point displayed on the display section is situated on the branch point.

5. Electronic equipment, comprising:
the rotary input device according to any one of claims 1-4; and
the display section.

6. Electronic equipment, comprising:
a rotary input device; and
a display section, wherein
the rotary input device including:
a rotary operation device rotatable around a shaft by receiving a rotation operation of an operator;
a detection section to detect a rotation angle of the rotary operation device;
a first display control section to make the display section display predetermined display information and switch a display state of the predetermined display information in conjunction with rotation of the rotary operation device;
a rotation driving section to apply a rotary force to the rotary operation device;
a first force sense presenting section to present a first force sense to the operator through the rotary operation device by a combination of at least any two of applying a rotary force in a normal rotation direction to the rotary operation device by the rotation driving section, applying a rotary force in a reverse rotation direction to the rotary operation device, and stopping applying the rotary force to the rotary operation device when the rotation angle detected by the detection section reaches a predetermined switching angle corresponding to the predetermined display information displayed on the display section;
a second force sense presenting section to present a second force sense different from the first force sense to the operator through the rotary operation device by applying the rotary force in the normal rotation direction to the rotary operation device by the rotation driving section when the rotation angle detected by the detection section is within a first range situated on a reverse rotation direction side of the predetermined switching angle, and by applying the rotary force in the reverse rotation direction to the rotary operation device by the rotation driving section when the rotation angle detected by the detection section is within a second range situated on a normal rotation direction side of the predetermined switching angel;
a second display control section to make the display section display a predetermined route from a start point to an end point and a point showing a current position; and
a third force sense presenting section to present a third force sense to the operator through the rotary operation device by applying a rotary force in a clockwise direction to the rotary operation device by the rotation driving section if the route displayed on the display section is in a rightward direction when the point displayed on the display section is situated on a branch point, by applying a rotary force in a counterclockwise direction to the rotary operation device by the rotation driving section if the route displayed on the display section is in a leftward direction when the point displayed on the display section is situated on the branch point, and by applying to the rotary operation device a rotary force in a direction of repelling any rotation in the clockwise direction and the counterclockwise direction by the rotation driving section if the route displayed on the display section is in a direct advance direction when the point displayed on the display section is situated on the branch point, wherein
the second force sense presenting section enlarges the rotary force in the normal rotation direction to be applied to the rotary operation device by the rotation driving section as the rotation angle detected by the detection section approaches the predetermined switching angle when the rotation angle detected by the detection section is within the first range situated on the reverse rotation direction side of the predetermined switching angle, and the second force sense presenting section lessens the rotary force in the reverse rotation direction to be applied to the rotary operation device by the rotation driving section as the rotation angle detected by the detection section becomes more distant from the predetermined switching angle when the rotation angle detected by the detection section is within the second range situated on the normal rotation direction side of the predetermined switching angle; and
the first force sense presenting section and/or the second force sense presenting section changes ways of presenting the first force sense and/or the second force sense by a first predetermined switching angle and a second predetermined switching angle among the plurality of predetermined switching angles.
